# EUROPÄISCHE PATENTSCHRIFT

(11) **EP 2 195 179 B1**
(45) Veröffentlichungstag und Bekanntmachung des Hinweises auf die Patenterteilung: **06.06.2012**
(21) Anmeldenummer: 08803416.0
(22) Anmeldetag: 29.08.2008
(51) Int. Cl.: B60G 15/06

(54) **ELASTISCHES LAGER**
FLEXIBLE BEARING
PALIER ÉLASTIQUE

(30) Priorität: 27.09.2007 DE 102007046292
(43) Veröffentlichungstag der Anmeldung: 16.06.2010
(73) Patentinhaber: Trelleborg Automotive Germany GmbH, 64747 Breuberg (DE)
(72) Erfinder: HOFMANN, Manfred, 65597 Hünfelden (DE); GRAEVE, Andreas, 56072 Koblenz (DE)
(74) Vertreter: Preissner, Nicolaus
(86) Internationale Anmeldenummer: PCT/EP2008/061428
(87) Internationale Veröffentlichungsnummer: WO 2009/043656

(56) Entgegenhaltungen:
- EP-A- 1 270 284
- DE-A1- 10 062 010
- DE-A1- 19 748 634
- FR-A- 2 772 307
- US-A- 5 628 388
- US-A- 6 126 155
- US-A1- 2002 145 242
- US-A1- 2004 178 552

## Beschreibung

Die Erfindung betrifft ein Stützlager für ein Federbein eines Kraftfahrzeuges, mit einem in einem Gehäuse aufgenommenen Federelement, an dem ein zu lagerndes Teil festlegbar ist, wobei das Federelement im Wesentlichen nicht dämpfende Eigenschaften aufweist, wobei an dem Federelement ein Elastomerkörper angeordnet ist, der mit dem Gehäuse zusammenwirkt, und wobei an dem Elastomerkörper mit Abstand zu dem Federelement ein Befestigungselement zur Festlegung des zu lagernden Teils angeordnet ist.

Derartige elastische Lager werden beispielsweise als Stützlager zur Lagerung eines Federbeins eines Kraftfahrzeugs verwendet.

In Einzelradaufhängungen sind häufig Feder- und Dämpferbeine, etwa nach dem McPherson-Prinzip vorzufinden, die einen mit einer Kolbenstange versehenen Stoßdämpfer aufweisen. Im Unterschied zu reinen Dämpferbeinen weisen Federbeine zusätzlich eine Schraubenfeder auf, die an der Karosserie angreifende Hochkräfte, also statische Lasten, aufnimmt und sich an einem mit dem Stoßdämpfer verbundenen Federteller abstützt.

Das Ende der Kolbenstange und gegebenenfalls die Schraubenfeder sind durch ein Stützlager an der Karosserie abgestützt. Das Stützlager dient unter anderem dazu, durch die Räder erzeugte Schwingungen zu isolieren. Bekannte Stützlager weisen Federelemente auf, die als Elastomerfedern, insbesondere als Gummifedern, ausgeführt sind. Derartige Elastomerfedern weisen jedoch eine relativ hohe Dämpfung auf, wodurch die akustische Isolation, d.h. die Reduzierung der Übertragung von Schwingungen auf die Karosserie, schlecht ist. Weiterhin erfordern die bekannten Elastomerfedern einen relativ großen Bauraum.

In der US 2004/0178552 A1 wird ein Stützlager für ein Federbein eines Kraftfahrzeugs offenbart, das eine Kolbenstange, einen Elastomerkörper, einen oberen Befestigungsflansch, einen Anschlagpuffer sowie eine mit dem Anschlagpuffer verbundene Platte mit einer U-förmigen Abwickelmulde umfasst. Der Anschlagpuffer ist mit der Kolbenstange verbunden. Der Elastomerkörper ist fest mit dem Befestigungsflansch und mit der Kolbenstange verbunden, wobei der Elastomerkörper mittels eines Befestigers an der Kolbenstange in vertikaler Richtung festgelegt ist. Zudem weist der Befestigungsflansch einen U-förmigen Bereich auf. Der Befestigungsflansch besteht aus einem duktilen Stahl wie Eisen oder alternativ aus einem metallischen Material, das eine steife Wabenstruktur aufweist.

Die DE 102 41 402 A1 sieht bei einem Stützlager für ein Federbein ein erstes Federelement vor, das als konvex gekrümmte Ringscheibe ausgestaltet und von der Kolbenstange des Stoßdämpfers des Federbeins in axialer Richtung auf Biegung belastbar ist. Ein zweites Federelement, das zu dem ersten im Wesentlichen identisch ist, ist gegensinnig zu dem ersten Federelement angeordnet. Zwischen den Federelementen ist eine Abstandsplatte vorgesehen, die in axialer Richtung auftretende Kräfte zuverlässig in die Federelemente einleitet. Die Federelemente sind durch Spritzgießen aus thermoplastischem Elastomer oder einem faserverstärkten Kunststoff gefertigt.

Es ist **Aufgabe** der Erfindung, ein elastisches Lager der eingangs genannten Art vorzuschlagen, das gute dynamische Isolationseigenschaften und einen geringen Bauraum sowie einen Schutz gegen übermäßige Auslenkung aufweist.

Zur **Lösung** dieser Aufgabe wird gemäß Patentanspruch 1 bei einem elastischen Lager der eingangs genannten Art vorgeschlagen, dass das Federelement im Wesentlichen nicht dämpfende Eigenschaften aufweist, dass der Elastomerkörper rotationssymmetrisch ausgebildet ist und eine Axialrichtung aufweist, wobei der Elastomerkörper Wülste aufweist, die in Verbindung mit Anschlagflächen des Gehäuses die Bewegung des Federelements in der Axialrichtung begrenzen.

Das erfindungsgemäße Lager zeichnet sich durch zuverlässige Verhärtung in Axialrichtung bei Überlastung aus. Das Federelement ist nachgiebig ausgebildet und weist im Wesentlichen keine Dämpfung auf. Somit prägt das Federelement die Grundsteifigkeit des Lagers in Axialrichtung. Aufgrund dieser Eigenschaften weist das Lager sehr gute akustische Isolationseigenschaften auf. Insbesondere tritt bei höheren Frequenzen keine dynamische Verhärtung auf. Der Elastomerkörper hat nur geringen Einfluss auf die Grundsteifigkeit in Axialrichtung und wirkt zum einen begrenzend als Anschlagteil und zum anderen als Schubteil. Hierbei kann die Steifigkeit in der x- und y-Richtung durch die Höhe des wirksamen Materialbereichs des Elastomerkörpers eingestellt werden. Weiterhin erfordert das erfindungsgemäße Lager nur einen geringen Bauraum.

Vorteilhafte Ausgestaltungen sind Gegenstand der abhängigen Ansprüche.

Vorteilhaft besteht das Federelement aus einem Faserverbundwerkstoff, einem thermoplastischen Elastomer oder einem Metallfederblech.

Dabei kann das Matrixmaterial des Faserverbundwerkstoffs vorteilhaft ein thermoplastischer Kunststoff, insbesondere Polyamid sein.

Die Fasern des Faserverbundwerkstoffes sind vorteilhaft Glasfasern, Kohlefasern oder Aramidfasern.

Das Federelement weist vorteilhaft eine im Wesentlichen plane Grundform auf. Hierdurch ergibt sich ein sehr geringer Raumbedarf.

Bei einer vorteilhaften Ausgestaltung ist das Federelement ringscheibenförmig ausgebildet.

Zur Erhöhung der Nachgiebigkeit kann das Federelement vorteilhaft einen Wellenkonturbereich oder eine evolventenförmige Aussparung aufweisen.

Hierbei kann der Wellenkonturbereich vorteilhaft S-förmig ausgebildet sein.

Das Federelement ist vorteilhaft aus einer unter Wärmeeinwirkung gepressten und dabei ausgehärteten Faserverbundplatte hergestellt.

Das Federelement kann einen ersten Befestigungsbereich zur Befestigung an dem Gehäuse oder an der Karosserie aufweisen.

Vorteilhaft ist der Elastomerkörper an das Federelement anvulkanisiert. Dadurch ist eine sichere Verbindung des Federelements mit dem Anschlagelement gewährleistet.

In vorteilhafter Ausgestaltung ist das Befestigungselement ringscheibenförmig ausgebildet. Die Ringscheibe kann wenigstens teilweise in das Anschlagelement einvulkanisiert sein.

Der Elastomerkörper ist vorteilhaft rotationssymmetrisch ausgebildet.

Das erfindungsgemäße elastische Lager kann als Stützlager für ein Federbein, als Motorlager, als Getriebelager oder als Drehmomentstützenlager ausgebildet sein.

Nachfolgend wird die Erfindung an Hand eines Ausführungsbeispieles näher beschrieben, das in den beigefügten Zeichnungen schematisch dargestellt ist. Es zeigen:
- Fig. 1: ein Längsschnitt durch einen Schwingungsdämpfer eines Kraftfahrzeugs mit einer Ausführungsform des erfindungsgemäßen Stützlagers;
- Fig. 2: eine vergrößerte Ansicht wie in Fig. 1 einer Ausführungsform des erfindungsgemäßen Stützlagers.

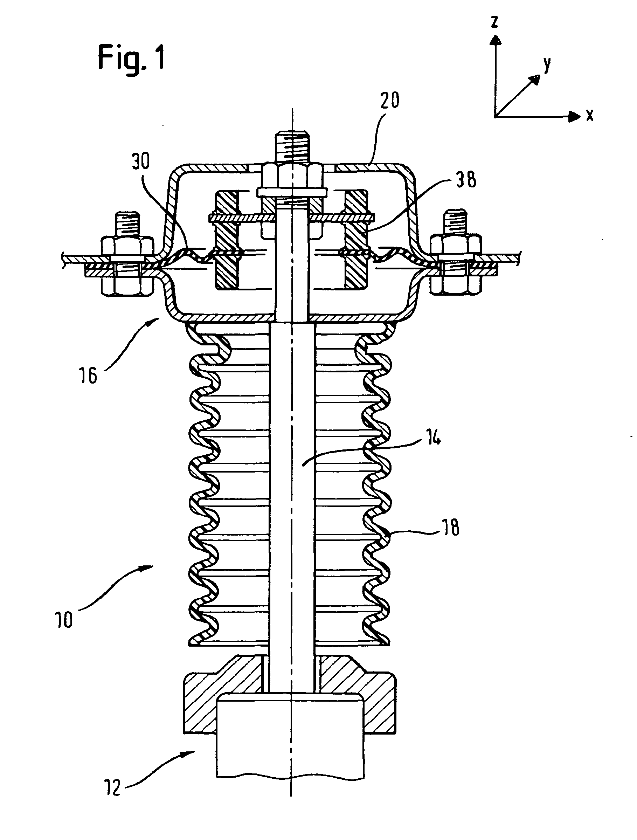

Fig. 1 zeigt ein Federbein 10 eines Kraftfahrzeugs. Das Federbein 10 weist einen Stoßdämpfer 12 auf, der mittels einer Kolbenstange 14, die sich in axialer Richtung z erstreckt, an einem Stützlager 16 gelagert ist, das an der Fahrzeugkarosserie festgelegt ist.

Um die Kolbenstange 14 des Stoßdämpfers 12 gegen Umwelteinflüsse zu schützen, ist eine im Wesentlichen zylinderförmige Schutzmanschette 18 vorgesehen, die die Kolbenstange 14 umgibt.

Die Kolbenstange 14 nimmt von dem Stoßdämpfer 12 kommende dynamische Schwingungen auf und überträgt sie an das Stützlager 16.

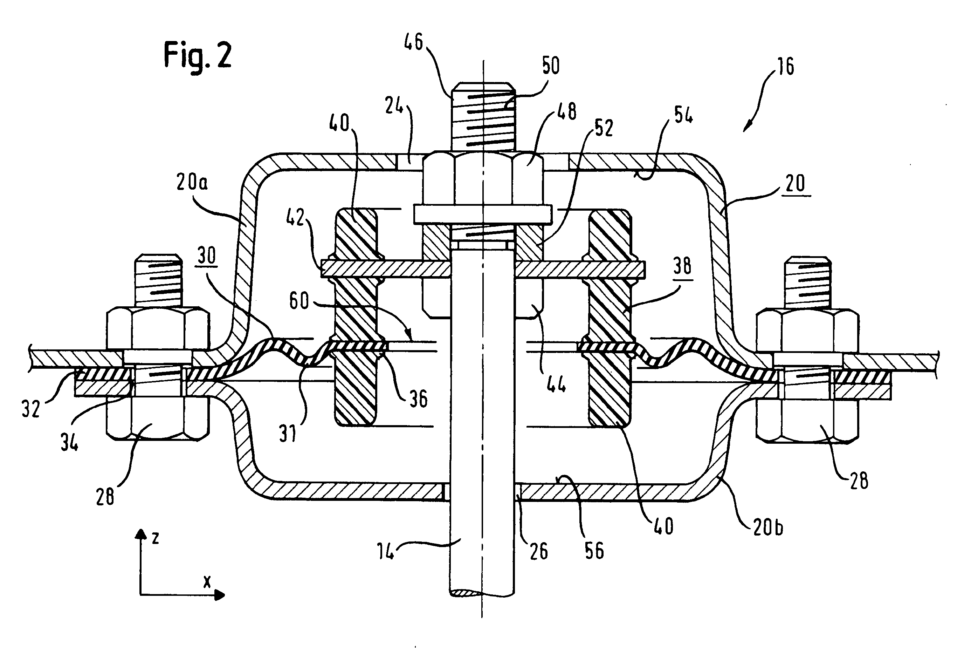

Das in Fig. 2 in vergrößerter Darstellung gezeigte Stützlager 16 weist ein Gehäuse 20 mit einem Deckelteil 20a und einem Bodenteil 20b auf. Das Deckelteil 20a und das Bodenteil 20b weisen jeweils Durchgangsöffnungen 24, 26 auf, durch die die Kolbenstange 14 geführt ist.

Die Abstützung der Kolbenstange 14 erfolgt mittels eines Federelements 30, das näherungsweise ringscheibenförmig ausgebildet ist, und an dem ein rotationssymmetrischer Elastomerkörper 38 anvulkanisiert ist.

Das Federelement 30 weist an seinem Außenumfang einen ersten Befestigungsabschnitt 32 auf. Der Befestigungsabschnitt 32 ist zwischen den Gehäuseteilen 20a, 20b an einer Schraubverbindung 28 festgelegt.

Das Federelement 30 besteht aus einem tiefziehbaren Faserverbundwerkstoff. Alternativ kann das Federelement jedoch auch aus einem Stahlfederblech oder einem thermoplastischen Kunststoff bestehen.

Das Federelement 30 weist einen die Elastizität erhöhenden Wellenkonturbereich 31 mit S-förmigen Querschnitt auf, der mittels Tiefziehen eingeformt ist.

An dem Innenumfang des Federelements 30 ist ein zweiter Befestigungsabschnitt 36 vorgesehen, an den der Elastomerkörper 38 anvulkanisiert ist.

Der Elastomerkörper 38 ist rotationssymmetrisch ausgebildet und weist an seinen in Axialrichtung z weisenden Enden jeweils Wülste 40 auf. Eine Ringscheibe 42 ist mit Abstand zu dem Federelement 30 in den Elastomerkörper 30 einvulkanisiert. An der Ringscheibe 42 ist die Kolbenstange 14 des Stoßdämpfers 12 befestigt.

Zur Befestigung der Ringscheibe 42 an der Kolbenstange 14 ist ein Anschlag 44 vorgesehen, an dem die Ringscheibe 42 anliegt. An dem gehäuseseitigen Ende 46 der Kolbenstange 14 ist ein Gewinde 50 vorgesehen, auf das eine Mutter 48 aufgeschraubt werden kann, die die Ringscheibe 42 mittels eines Anpressabschnitts 52 an den Anschlag anpresst.

Der Elastomerkörper 38 begrenzt die Auslenkung des Federelementes 30 in der z-Richtung und wirkt somit als Anschlag. Wird die Auslenkung des Federelementes 30 in der z-Richtung (Axialrichtung) zu groß, so berühren die Wülste 40 die Anschlagflächen 54, 56 des Gehäuses 20 und begrenzen die Bewegung.

Weiterhin dient der Elastomerkörper 30 als Schubteil zur Aufnahme von in x- oder y-Richtung auftretenden Kräften. Hierbei kann die Steifigkeit in den vorgenannten Raumrichtungen durch den Abstand zwischen dem Federelement 30 und der Ringscheibe 42 eingestellt werden.

Das Grundmaterial für das Federelement 30 ist eine kunststoffgetränkte Fasermatte. In diesem Ausführungsbeispiel besteht die Fasermatte aus Glasfasern und ist mit Polyamid getränkt.

Die Form des Federelements 30 wird durch Tiefziehen erzeugt. Dazu wird die Fasermatte zunächst auf 280 bis 300 °C aufgeheizt, damit das Material formbar wird. Anschließend wird die warme Fasermatte in eine Tiefziehpresse gelegt und tiefgezogen. Dabei wird der wellenförmige Querschnitt der Tiefziehform auf die Fasermatte übertragen.

Schließlich wird das fertiggestellte Federelement 30 abgekühlt und bei weniger als 130 °C aus der Form entnommen.

Das Federelement 30 wird sodann zusammen mit der Ringscheibe 42 in eine Vulkanisationsform eingelegt. Nachfolgend wird der Elastomerkörper 38 an das Federelement 30 und die Ringscheibe 42 angeformt.

Als Grundstoff für die zur Herstellung des Federelements 30 verwendete Fasermatte sind neben Glasfasern auch andere Fasermaterialien wie beispielsweise Kohlefasern einsetzbar.

Ebenso kann die Fasermatte mit anderen Kunststoffen als Polyamid getränkt sein. Insbesondere thermoplastische Elastomere wie zum Beispiel Polyphenylensulfid weisen eine gute Eignung für diesen Anwendungsfall auf.

Alternativ kann ein Federelement auch aus einem Stahlfederblech hergestellt werden. Hierbei kann zur Erhöhung der Nachgiebigkeit eine evolventenförmige Aussparung eingebracht werden.

Das erfindungsgemäße Stützlager 16 weist aufgrund des verwendeten Federelements 30 mit hoher Nachgiebigkeit gute dynamische Isolationseigenschaften auf. Dadurch wird auch bei hohen Frequenzen die Übertragung von akustischen Schwingungen auf die Karosserie vermieden. Der an dem Federelement anvulkanisierte Elastomerkörper wirkt als Anschlag- und Schubteil. Hierbei ist die Steifigkeit in der x- und y-Richtung einstellbar. Weiterhin zeichnet sich das Stützlager 16 durch einen geringen Bauraum aus.

### Bezugszeichenliste

- 10: Federbein
- 12: Stoßdämpfer
- 14: Kolbenstange
- 16: Stützlager
- 18: Schutzmanschette
- 20: Gehäuse
- 20a: Deckelteil
- 20b: Bodenteil
- 22: Abschlusselement
- 24: Durchgangsöffnung
- 26: Durchgangsöffnung
- 28: Schraubverbindung
- 30: Federelement
- 31: Wellenkonturbereich
- 32: erster Befestigungsabschnitt
- 34: Durchgangslöcher
- 36: zweiter Befestigungsabschnitt
- 38: Elastomerkörper
- 40: Wulst
- 42: Befestigungselement
- 44: Anschlag
- 46: gehäuseseitiges Ende
- 48: Mutter
- 50: Gewinde
- 52: Anpressabschnitt
- 54: Anschlagfläche
- 56: Anschlagfläche
- x: Radialrichtung
- y: Radialrichtung
- z: Axialrichtung

## Patentansprüche

1. Stützlager (16) für ein Federbein (10) eines Kraftfahrzeuges, mit einem in einem Gehäuse (20) aufgenommenen Federelement (30), an dem ein zu lagerndes Teil (14) festlegbar ist, wobei das Federelement (30) im Wesentlichen nicht dämpfende Eigenschaften aufweist, wobei an dem Federelement (30) ein Elastomerkörper (38) angeordnet ist, der mit dem Gehäuse (20) zusammenwirkt, und wobei an dem Elastomerkörper (38) mit Abstand zu dem Federelement (30) ein Befestigungselement (42) zur Festlegung des zu lagernden Teils (14) angeordnet ist, **dadurch gekennzeichnet, dass** der Elastomerkörper (38) rotationssymmetrisch ausgebildet ist und eine axiale Richtung (z) aufweist, wobei der Elastomerkörper (38) Wülste (40) aufweist, die in Verbindung mit Anschlagflächen (54, 56) des Gehäuses (20) die Bewegung des Federelements (30) in der axialen Richtung (z) begrenzen.

2. Stützlager nach Anspruch 1, **dadurch gekennzeichnet, dass** das Federelement (30) aus einem Faserverbundwerkstoff, einem thermoplastischen Elastomer oder einem Metallfederblech besteht.

3. Stützlager nach einem der voranstehenden Ansprüche, **dadurch gekennzeichnet, dass** das Matrixmaterial des Faserverbundwerkstoffs ein thermoplastischer Kunststoff, insbesondere Polyamid ist.

4. Stützlager nach einem der voranstehenden Ansprüche, **dadurch gekennzeichnet, dass** die Fasern des Faserverbundwerkstoffs Glasfasern, Kohlefasern oder Aramidfasern sind.

5. Stützlager nach einem der voranstehenden Ansprüche, **dadurch gekennzeichnet, dass** das Federelement (30) eine im Wesentlichen plane Grundform aufweist.

6. Stützlager nach einem der voranstehenden Ansprüche, **dadurch gekennzeichnet, dass** das Federelement (30) ringscheibenförmig ausgebildet ist.

7. Stützlager nach einem der voranstehenden Ansprüche, **dadurch gekennzeichnet, dass** das Federelement (30) einen die Elastizität erhöhende Wellenkonturbereich (31) oder eine evolventenförmige Aussparung aufweist.

8. Stützlager nach Anspruch 7, **dadurch gekennzeichnet, dass** der Wellenkonturbereich (31) S-förmig ausgebildet ist, dass das Federelement einen wellenförmigen Querschnitt aufweist und sich in radialer Richtung erstreckt.

9. Stützlager nach einem der voranstehenden Ansprüche, **dadurch gekennzeichnet, dass** das Federelement (30) aus einer unter Wärmeeinwirkung gepressten und dabei ausgehärteten Faserverbundplatte hergestellt ist.

10. Stützlager nach einem der voranstehenden Ansprüche, **dadurch gekennzeichnet, dass** das Federelement (30) einen ersten Befestigungsbereich (32) zur Befestigung an dem Gehäuse (20) oder an der Karosserie aufweist.

11. Stützlager nach Anspruch 10, **dadurch gekennzeichnet, dass** der erste Befestigungsbereich (32) flach ausgebildet ist.

12. Stützlager nach Anspruch 10 oder 11, **dadurch gekennzeichnet, dass** der erste Befestigungsbereich (32) mit der Karosserie verschraubbar ausgebildet ist.

13. Stützlager nach einem der voranstehenden Ansprüche, **dadurch gekennzeichnet, dass** der Elastomerkörper (38) an das Federelement (30) anvulkanisiert ist.

14. Stützlager nach einem der voranstehenden Ansprüche, **dadurch gekennzeichnet, dass** das Befestigungselement (42) als Ringscheibe ausgebildet ist.

## Claims

1. Support mounting (16), for a suspension strut (10) of a motor vehicle, having a spring element (30) accommodated within a housing (20) to which a part to be supported (14) can be fastened wherein the spring element (30) displays substantially non-damping properties, wherein an elastomer body (38) which interacts with the housing (20) is arranged on the spring element (30) and wherein there is a fastening element (42) on the elastomer body (38) at a distance from the spring element (30) for fixing the part to be supported (14) **characterised in that** the elastomer body (38) has a rotationally symmetrical shape and an axial direction (z) wherein the elastomer body (38) has raised rims (40) which, in conjunction with the contact surfaces (54, 56) of the housing (20), limit the movement of the spring element (30) in the axial direction (z).

2. Support mounting according to claim 1 **characterised in that** the spring element (30) consists of a fibre composite material, a thermoplastic elastomer or spring metal sheet.

3. Support mounting according to one of the preceding claims **characterised in that** the matrix material of the fibre composite material is a thermoplastic material, in particular polyamide.

4. Support mounting according to one of the preceding claims **characterised in that** the fibres of the fibre composite material are glass fibres, carbon fibres or aramid fibres.

5. Support mounting according to one of the preceding claims **characterised in that** the spring element (30) has an essentially planar basic form.

6. Support mounting according to one of the preceding claims **characterised in that** the spring element (30) is shaped like an annular disk.

7. Support mounting according to one of the preceding claims **characterised in that** the spring element (30) has a wave-shaped area (31) to enhance the elasticity or an involute-shaped recess.

8. Support mounting according to claim 7 **characterised in that** the wave-contoured area (31) is S-shaped, that the spring element has a wave-shaped cross-section and extends in the radial direction.

9. Support mounting according to one of the preceding claims **characterised in that** the spring element (30) is made of a fibre composite plate pressed under heat and thereby cured.

10. Support mounting according to one of the preceding claims **characterised in that** the spring element (30) has a first mounting section (32) for attachment to the housing (20) or to the bodywork.

11. Support mounting according to claim 10 **characterised in that** the first mounting section (32) is flat.

12. Support mounting according to claim 10 or 11 **characterised in that** the first mounting section (32) is formed so that it can be screwed to the body.

13. Support mounting according to one of the preceding claims **characterised in that** the elastomer body (38) is vulcanised onto the spring element (30).

14. Support mounting according to one of the preceding claims **characterised in that** the fastening element (42) is shaped like an annular disc.

## Revendications

1. Palier de soutien (16) pour une jambe de suspension (10) d'un véhicule automobile, comprenant un élément élastique (30) reçu dans un boîtier (20), sur lequel peut être immobilisée une pièce (14) à soutenir, dans lequel l'élément élastique (30) présente essentiellement des propriétés non amortissantes, et un corps en élastomère (38) est agencé sur l'élément élastique (30), ledit corps coopérant avec le boîtier (20), et un élément de fixation (42) destiné à immobiliser la pièce à soutenir (14) est agencé sur le corps en élastomère (38) à distance de l'élément élastique (30), **caractérisé en ce que** le corps en élastomère (38) est réalisé à symétrie de révolution et présente une direction axiale (z), ledit corps en élastomère (38) comportant des bourrelets (40) qui, en association avec des surfaces de butée (54, 56) du boîtier (20), limitent le mouvement de l'élément élastique (30) dans la direction axiale (z).

2. Palier de soutien selon la revendication 1, **caractérisé en ce que** l'élément élastique (30) est formé d'un matériau composite à fibres, d'un élastomère thermoplastique, ou d'une tôle-ressort métallique.

3. Palier de soutien selon l'une des revendications **précédentes, caractérisé en ce que** le matériau de matrice du matériau composite à fibre est une matière thermoplastique, en particulier du polyamide.

4. Palier de soutien selon l'une des revendications précédentes, **caractérisé en ce que** les fibres du matériau composite à fibres sont des fibres de verre, des fibres de carbone ou des fibres aramides.

5. Palier de soutien selon l'une des revendications précédentes, **caractérisé en ce que** l'élément élastique (30) présente une forme de base essentiellement plane.

6. Palier de soutien selon l'une des revendications précédentes, **caractérisé en ce que** l'élément élastique (30) est réalisé en forme de disque annulaire.

7. Palier de soutien selon l'une des revendications précédentes, **caractérisé en ce que** l'élément élastique (30) comporte une zone à contour ondulé (31) augmentant l'élasticité ou un évidement en forme de développante.

8. Palier de soutien selon la revendication 7, **caractérisé en ce que** la zone à contour ondulé (31) est réalisée en forme de S, **en ce que** l'élément élastique présent une section transversale de forme ondulée et s'étend en direction radiale.

9. Palier de soutien selon l'une des revendications précédentes, **caractérisé en ce que** l'élément élastique (30) est fabriqué à partir d'une plaque composite à fibres pressée avec application de chaleur et ainsi durcie.

10. Palier de soutien selon l'une des revendications précédentes, **caractérisé en ce que** l'élément élastique (30) comporte une première zone de fixation (32) pour la fixation sur le boîtier (20) ou sur la carrosserie.

11. Palier de soutien selon la revendication 10, **caractérisé en ce que** la première zone de fixation (32) est réalisée plane.

12. Palier de soutien selon la revendication 10 ou 11, **caractérisé en ce que** la première zone de fixation (32) est réalisée de manière à pouvoir être vissée avec la carrosserie.

13. Palier de soutien selon l'une des revendications précédentes, **caractérisé en ce que** le corps en élastomère (38) est appliqué par vulcanisation sur l'élément élastique (30).

14. Palier de soutien selon l'une des revendications précédentes, **caractérisé en ce que** l'élément de fixation (42) est réalisé sous forme de disque annulaire.
